# EUROPEAN PATENT SPECIFICATION

(11) **EP 4 035 975 B1**
(45) Date of publication and mention of the grant of the patent: **04.10.2023**
(21) Application number: 21193510.1
(22) Date of filing: 27.08.2021
(51) Int. Cl.: B62H 1/02, B62K 11/04

(54) **MOTORCYCLE**
MOTORRAD
MOTOCYCLETTE

(30) Priority: 02.02.2021 JP 2021015114
(43) Date of publication of application: 03.08.2022
(73) Proprietor: Yamaha Hatsudoki Kabushiki Kaisha, Iwata-shi, Shizuoka 438-8501 (JP)
(72) Inventor: INOUE, Yuichi, Iwata-shi, 4388501 (JP)
(74) Representative: Di Sciuva, Michele

(56) References cited:
- US-A- 4 883 284
- US-A1- 2004 212 172
- US-A1- 2010 212 992
- US-A1- 2017 282 985
- US-A1- 2020 122 806

## Description

### BACKGROUND OF THE INVENTION

### Field of the Invention

The present invention relates to a motorcycle having a side stand.

### Description of the Related Art

Motorcycles have been known in the art that include a side stand rotatably supported on a body frame and a rotary side stand switch for detecting the position of the side stand. JP 2007-196820A, for example, discloses such a motorcycle.

A rotary side stand switch includes a housing, a rotor rotatable relative to the housing, and a switch that is turned ON/OFF by the rotation of the rotor. With the motorcycle disclosed in JP 2007-196820A, the rotor is secured at the base portion of the side stand. The rotor rotates following the rotation of the side stand. Therefore, there is a need to restrict the rotation of the housing so that the housing does not rotate together with the rotor.

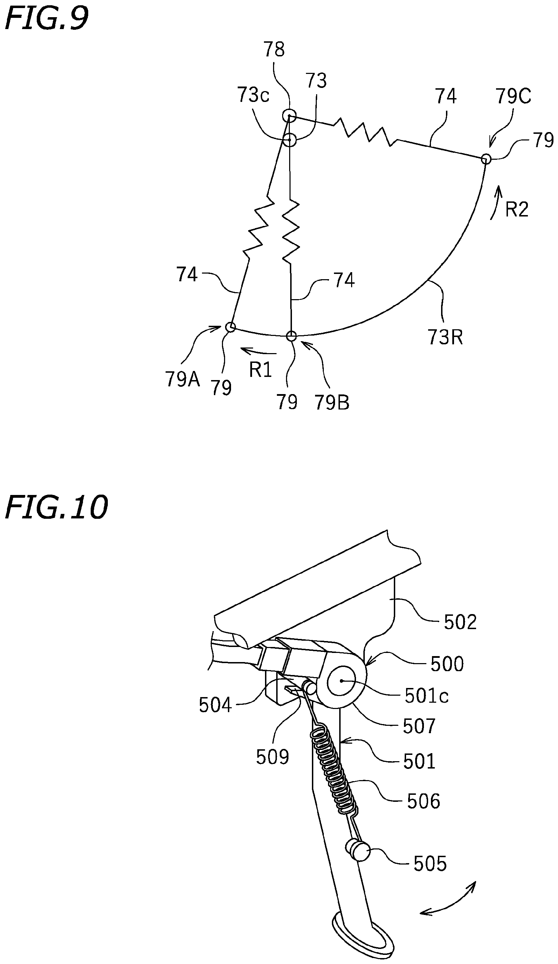

As shown in FIG. **10****,** a housing **507** includes a notch **509.** A bracket **502** of the body frame is provided with a shaft **504.** The shaft **504** is in engagement with the notch **509** of the housing **507.** The shaft **504** restricts the rotation of the housing **507.**

A side stand **501** rotates between a position in which the tip portion thereof is in contact with the ground (hereinafter referred to as the standing position), and another position in which the tip portion is located rearward of the base portion (hereinafter referred to as the retracted position). FIG. **10** shows the standing position. The side stand **501** is provided with a return spring **506.** One end of the return spring **506** is attached to the shaft **504** provided on the bracket **502.** The other end of the return spring **506** is attached to the boss portion **505** provided on the side stand **501.** The shaft **504** extends outward in the vehicle width direction from the bracket **502.** The boss portion **505** extends outward in the vehicle width direction from the side stand **501.** A side stand switch **500** and the return spring **506** are arranged outward of the side stand **501** in the vehicle width direction.

### SUMMARY OF THE INVENTION

### Technical Problem

The return spring **506** serves the role of holding the side stand **501** in the standing position when the side stand **501** is in the standing position, and holding the side stand **501** in the retracted position when the side stand **501** is in the retracted position. In order for the return spring **506** to serve such a role, the position of the boss portion **505** at which the amount of extension of the return spring **506** is at maximum needs to be between the position of the boss portion **505** when the side stand **501** is in the standing position and the position of the boss portion **505** when the side stand **501** is in the retracted position. Therefore, there needs to be a predetermined positional relationship between a center of rotation **501c** of the side stand **501,** the shaft **504** supporting one end of the return spring **506,** and the boss portion **505** supporting the other end of the return spring **506.** Note that the center of rotation **501c** is also the center of rotation of the rotary side stand switch **500.**

Now, in some cases, it may be desirable to arrange a vehicle component such as a quick shifter upward of and near the rotary side stand switch **500.** With the configuration disclosed in JP 2007-196820A, however, the degree of freedom in layout is low. Therefore, it is difficult to arrange a vehicle component upward of and near the side stand switch **500.**

US-A-4883284 discloses a switch for detecting various angular positions of a motorcycle side stand bar. The switch is a rotary switch so arranged that a movable contact therein is moved with respect to stationary contacts in response to movement of the side stand bar whereby the position of the side stand bar can be detected while the switch can be advantageously positioned to permit greater freedom of switch design and installation and protection of the side stand pivot member. Various switch configurations and modes of attachment are disclosed, as well as various modes of electrical application of the switch in the operation of the vehicle. The document US2004/212172 discloses a motorcycle in accordance with the preamble of claim 1.

An object of the present invention is to provide a motorcycle that includes a rotary side stand switch for detecting the position of a side stand and has a high degree of freedom in layout.

### Solution To Problem

A motorcycle disclosed herein includes a body frame, a side stand, a support shaft, a rotary side stand switch, a pin, a first spring stop member, a second spring stop member, and a return spring. The side stand includes a base portion. The support shaft is configured to rotatably support the base portion of the side stand on the body frame. The side stand switch includes a housing and a rotor that is secured to the base portion of the side stand and is rotatable relative to the housing. The pin extends outward in the vehicle width direction from the body frame and is configured to engage with the housing. The pin restricts rotation of the housing. The first spring stop member extends inward in the vehicle width direction from the body frame. The second spring stop member extends inward in the vehicle width direction from the side stand. The return spring includes a first end portion that engages with the first spring stop member and a second end portion that engages with the second spring stop member. The side stand switch is arranged outward in the vehicle width direction relative to the base portion of the side stand. The return spring is arranged inward in the vehicle width direction relative to the side stand. The first spring stop member is arranged at a position that is off a center line of the pin.

With the motorcycle described above, the return spring and the rotary side stand switch are arranged on opposite sides from each other with respect to the side stand. The pin that prevents the housing from rotating together with the rotor and the first spring stop member that engages with the first end portion of the return spring are separate parts. In addition, the first spring stop member is arranged at a position that is off the center line of the pin. Therefore, the degree of freedom in layout is high for the side stand switch, the pin and the first spring stop member. Thus, with the motorcycle described above, a vehicle component such as a quick shifter can be easily arranged upward of and near the side stand switch, for example.

The pin may be arranged forward of an axial line of the support shaft as viewed from a direction outward in the vehicle width direction along the axial line of the support shaft.

Therefore, a vehicle component such as a quick shifter can be easily arranged upward of and near the side stand switch without being interfered by the pin.

The first spring stop member may be arranged upward of an axial line of the support shaft as viewed from a direction outward in the vehicle width direction along the axial line of the support shaft.

Therefore, since the first spring stop member is arranged upward of the axial line of the support shaft, the side stand switch, the pin and the first spring stop member can be arranged in a compact arrangement. Since the first spring stop member extends inward in the vehicle width direction, a vehicle component such as a quick shifter can be easily arranged upward of and near the side stand switch without being interfered by the first spring stop member.

The return spring may be made of a coil spring including a coil portion made of a spirally-wound strand and a straight portion made of a straight strand. The straight portion may be provided between the coil portion and the first end portion.

The first spring stop member may be a shaft.

The housing of the side stand switch may be formed with a U-shaped groove. The pin may be in engagement with the groove.

The side stand switch may be formed with a connection port that is open facing forward. The motorcycle may include a first wire harness connected to the connection port.

Therefore, the first wire harness extends forward from the side stand switch. Since the first wire harness is not extending upward from the side stand switch, it is possible to ensure a space upward of the side stand switch. Thus, a vehicle component such as a quick shifter can be easily arranged upward of and near the side stand switch.

The motorcycle may include: a shift pedal; a shift pedal sensor configured to detect an operation of the shift pedal; and a second wire harness connected to the shift pedal sensor and extending forward from the shift pedal sensor. The second wire harness may be arranged upward of the side stand switch.

Therefore, the second wire harness can be arranged in a compact arrangement upward of and near the side stand switch.

The motorcycle may include: an internal combustion engine; a shift shaft provided on the internal combustion engine; and a shift rod configured to link together the shift shaft and the shift pedal. The shift rod may be arranged upward of the side stand switch, the pin and the first spring stop member.

Therefore, the shift rod can be arranged in a compact arrangement upward of and near the side stand switch.

The side stand switch, the pin and the first spring stop member may be arranged rearward relative to a front end of the shift rod and forward relative to a rear end of the shift rod.

### Advantageous Effects Of Invention

According to the present invention, it is possible to provide a motorcycle that includes a rotary side stand switch for detecting the position of a side stand and has a high degree of freedom in layout.

### BRIEF DESCRIPTION OF THE DRAWINGS

FIG. **1** is a left side view showing a motorcycle according to an embodiment.
FIG. **2** is a perspective view showing a portion of the motorcycle.
FIG. **3** is a left side view showing a portion of the motorcycle.
FIG. **4** is a left side view showing a side stand, a side stand switch, etc.
FIG. **5** is a plan view showing the side stand, the side stand switch, etc.
FIG. **6** is a right side view showing the side stand, the side stand switch, etc.
FIG. **7** is a front view showing the side stand, the side stand switch, etc.
FIG. **8** is a view showing the side stand, the side stand switch, etc., as viewed from a direction outward in the vehicle width direction along the axial line of a support shaft.
FIG. **9** is a schematic view illustrating a positional relationship between a support shaft, an engagement shaft and a hook that is needed for a return spring to serve a predetermined role.
FIG. **10** is a perspective view showing a side stand, a side stand switch and a return spring of a conventional motorcycle.

### DETAILED DESCRIPTION OF THE PREFERRED EMBODIMENTS

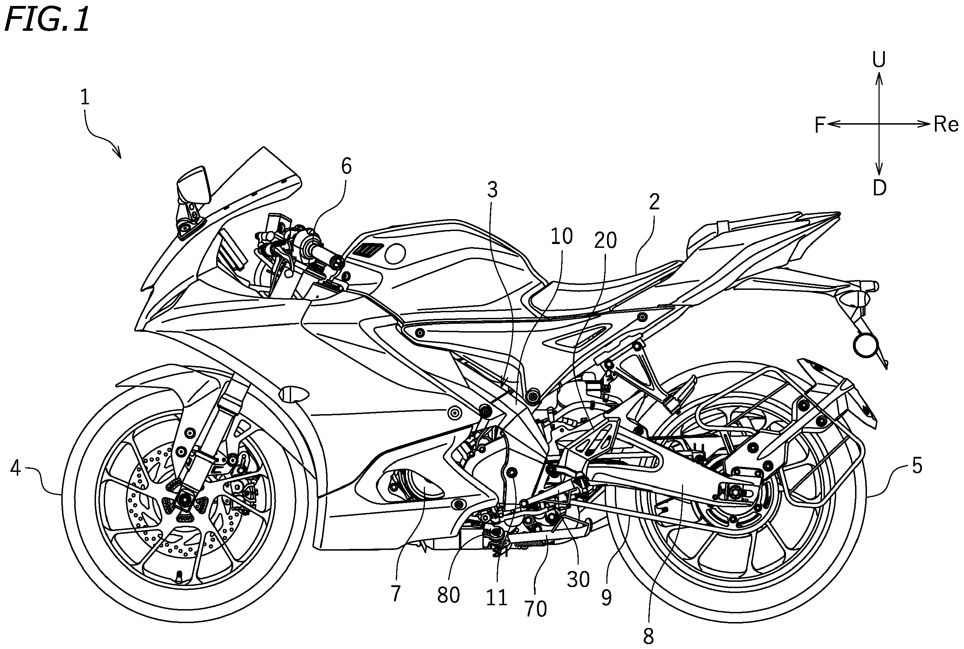

An embodiment of the present invention will now be described with reference to the drawings. FIG. **1** is a left side view showing a motorcycle **1** according to the present embodiment.

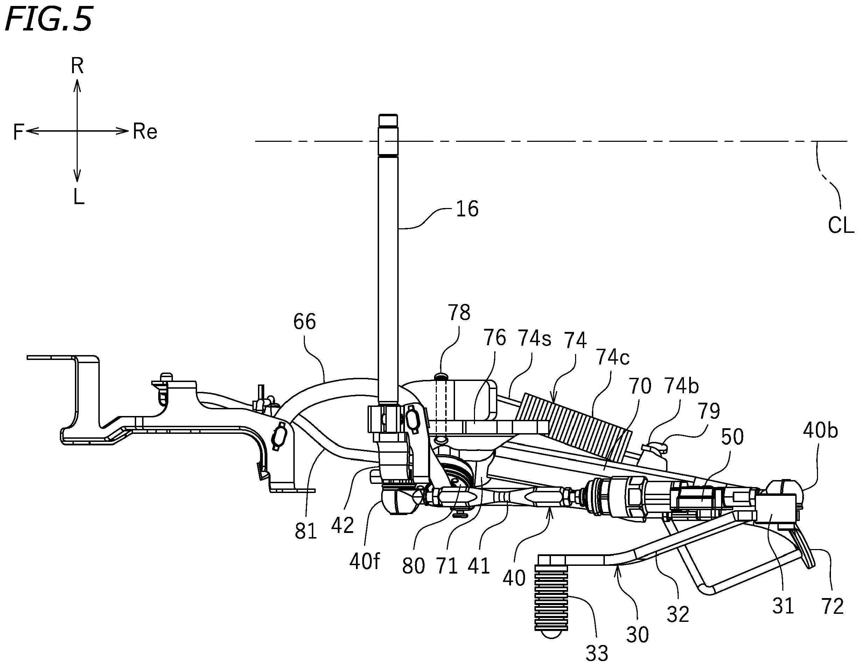

The terms front, rear, left, right, up and down, as used in the description below, refer to these directions as viewed from a virtual rider seated on a seat **2** while the motorcycle **1** is standing upright on a horizontal surface with no rider and no load thereon, unless specified otherwise. The designations F, Re, L, R, U and D, as used in the figures, refer to front, rear, left, right, up and down, respectively. The term "forward" refers not only to the direction that extends in the front direction along the vehicle center line **CL** (see FIG. **5**), as the vehicle is viewed from above, but also to directions that are inclined from that direction by an angle that is less than 90 degrees. Similarly, the term "rearward" refers not only to the direction that extends rearward along the vehicle center line **CL,** as the vehicle is viewed from above, but also to directions that are inclined from that direction by an angle that is less than 90 degrees. The term "leftward" refers not only to the direction that extends leftward vertical to the vehicle center line **CL,** as the vehicle is viewed from above, but also to directions that are inclined from that direction by an angle that is less than 90 degrees. The term "rightward" refers not only to the direction that extends rightward vertical to the vehicle center line **CL,** as the vehicle is viewed from above, but also to directions that are inclined from that direction by an angle that is less than 90 degrees. The term "upward" refers not only to the vertically upward direction, as the vehicle is viewed from the side, but also to directions that are inclined from that direction by an angle that is less than 90 degrees. The term "downward" refers not only to the vertically downward direction, as the vehicle is viewed from the side, but also to directions that are inclined from that direction by an angle that is less than 90 degrees.

As shown in FIG. **1****,** the motorcycle **1** includes a body frame **3,** the seat **2** supported on the body frame **3,** a front wheel **4,** a rear wheel **5,** a handle bar **6** for steering the front wheel **4,** and an internal combustion engine (hereinafter referred to as the engine) **7** for driving the rear wheel **5.** The engine **7** is supported on the body frame **3.**

The body frame **3** includes a left and a right side frame **10** extending downward. Each side frame **10** is arranged sideward of the engine **7.** As shown in FIG. **1****,** the left side frame **10** is arranged leftward of the engine **7.**

The pivot shaft **11** is supported on the side frame **10.** The front end portion of a rear arm **8** is pivotally linked to the pivot shaft **11.** The rear arm **8** is pivotally linked to the side frame **10** via the pivot shaft **11.** The rear wheel **5** is rotatably linked to the rear end of the rear arm **8.** The engine **7** and the rear wheel **5** are linked together by a chain **9,** which is an example of a power transmission member.

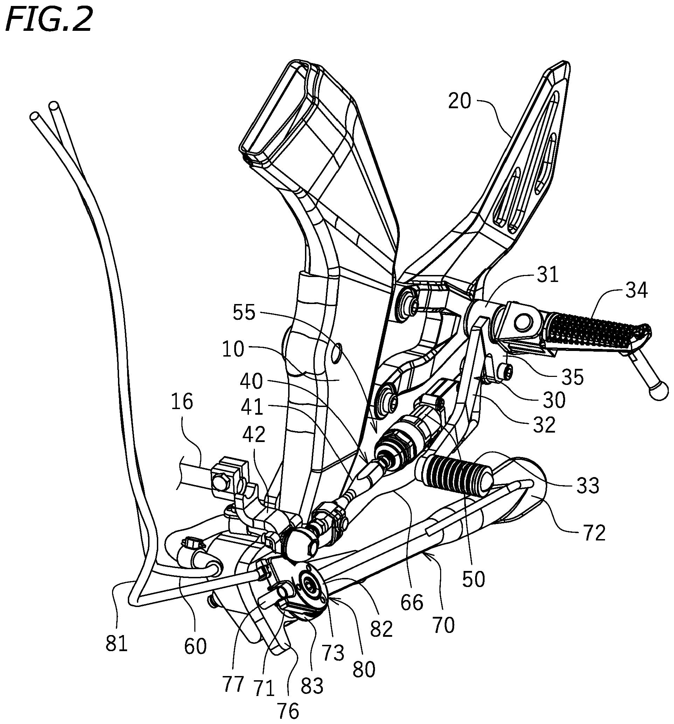

Although not shown in the figures, the engine **7** includes a stepped transmission. The engine **7** is provided with a shift shaft **16** (see FIG. **2**) of the transmission. As the shift shaft **16** rotates, the gear of the transmission is changed. A part of the shift shaft **16** is arranged outside the engine **7.**

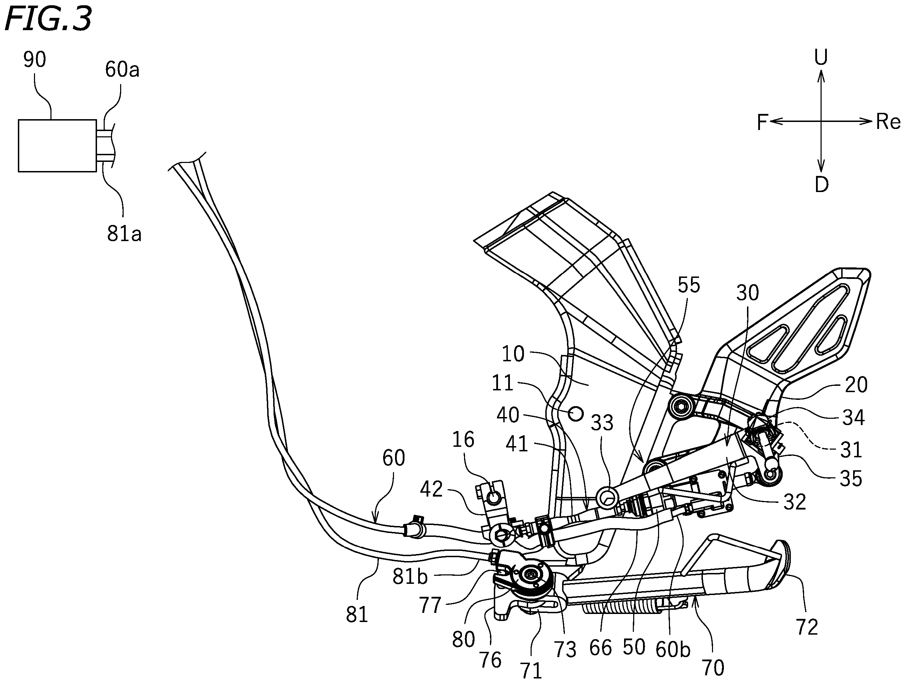

FIG. **2** and FIG. **3** are a perspective view and a left side view, respectively, showing a part of the motorcycle **1.** The motorcycle **1** includes a footrest **34,** a shift pedal **30** for operating the shift shaft **16,** a shift rod **40** that links together the shift shaft **16** and the shift pedal **30,** a side stand **70,** and a rotary side stand switch **80** for detecting the position of the side stand **70.**

A footrest bracket **20** is secured to the side frame **10.** The shift pedal **30** is attached to the footrest bracket **20.** The shift pedal **30** includes a pedal support shaft **31** that is rotatable in the up-down direction, a pedal arm **32** extending forward from the pedal support shaft **31,** a pedal operation shaft **33** extending leftward from the pedal arm **32,** and a link arm **35** extending downward from the pedal support shaft **31.** The pedal operation shaft **33** extends outward in the vehicle width direction from the pedal arm **32.** Note that "outward in the vehicle width direction" refers to the direction away from the vehicle center line **CL** (see FIG. **5**). "Inward in the vehicle width direction" refers to the direction toward the vehicle center line **CL.** The pedal support shaft **31** is rotatably supported on the footrest bracket **20.** The footrest **34** is arranged outward of the pedal support shaft **31** in the vehicle width direction.

The motorcycle **1** includes a quick shifter **55.** The quick shifter **55** temporarily reduces the torque of the engine **7** upon detecting an operation of the shift pedal **30** by the rider, thereby allowing for a shift change to be performed only by a pedal operation. The quick shifter **55** includes a shift pedal sensor **50** for detecting an operation of the shift pedal **30,** and a wire harness **60** connected to the shift pedal sensor **50.**

Here, the shift pedal sensor **50** is formed in a rod shape. The shift pedal sensor **50** forms a part of the shift rod **40.** The shift rod **40** includes a main rod **41** and the shift pedal sensor **50.** The front end portion of the main rod **41** is linked to the shift shaft **16** via a link arm **42.** The shift shaft **16** is connected to the upper end portion of the link arm **42.** The front end portion of the main rod **41** is rotatably connected to the lower end portion of the link arm **42.** The rear end of the main rod **41** is connected to the front end portion of the shift pedal sensor **50.** The rear end of the shift pedal sensor **50** is rotatably connected to the link arm **35** of the shift pedal **30.**

As shown in FIG. **3**, the wire harness **60** extends forward from the shift pedal sensor **50.** A rear end **60b** of the wire harness **60** is connected to the shift pedal sensor **50.** A front end portion **60a** of the wire harness **60** is connected to an ECU (Electronic Control Unit) **90.** A part of the wire harness **60** is inserted into a harness cover **66** and covered by the harness cover **66.** The harness cover **66** is formed in a hose shape.

The ECU **90** is configured to receive a signal from the shift pedal sensor **50** to perform a control of temporarily lowering the output power of the engine **7.** When the shift pedal sensor **50** detects a shift-up operation by the rider, the ECU **90** temporarily lowers the output power of the engine 7, thereby reducing the drive torque of the gear (not shown) of the transmission. Thus, the rider can perform a shift change without operating the clutch lever, for example. The rider can perform a shift change only by operating the shift pedal **30.**

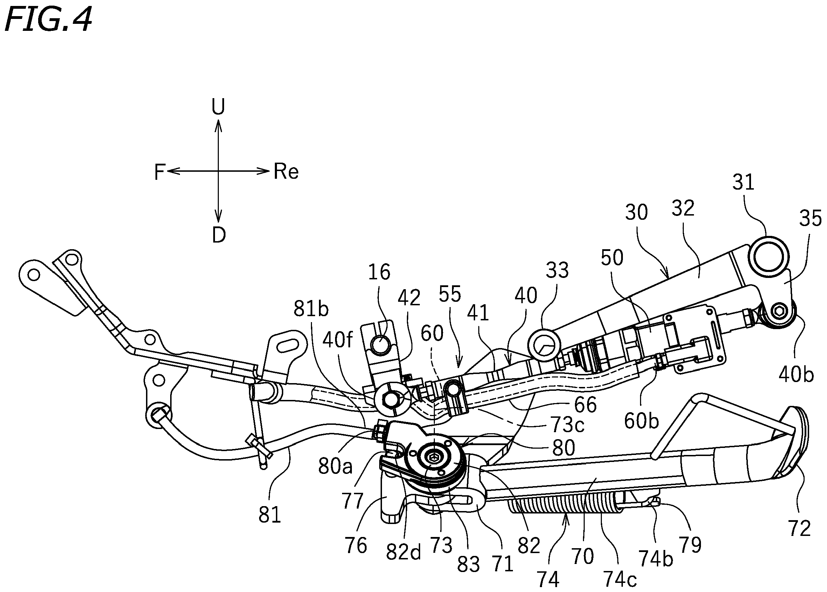

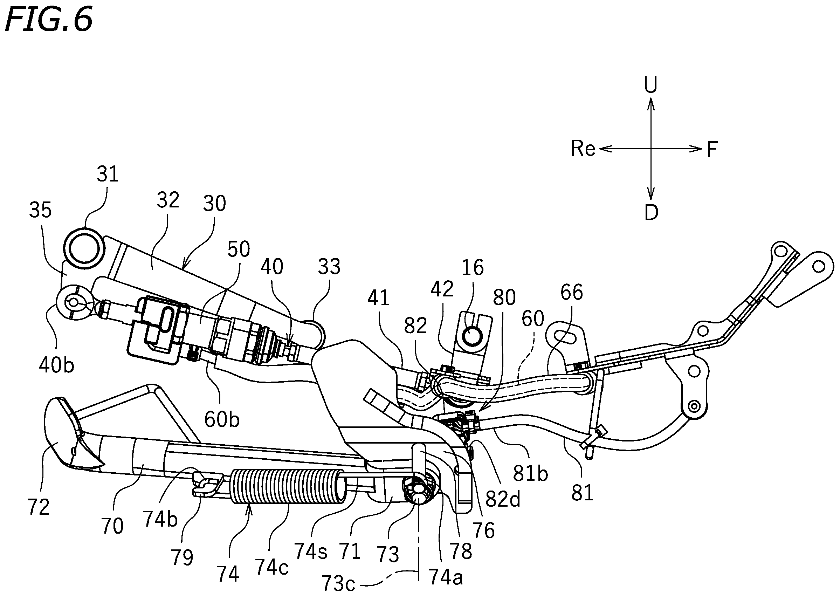

A bracket **76** is secured to a lower portion of the side frame **10.** The bracket **76** is a part of the body frame **3.** The side stand **70** is rotatably supported on the bracket **76.** FIG. **4****,** FIG. **5****,** FIG. **6** and FIG. **7** are a left side view, a plan view, a right side view and a front view, respectively, showing the side stand **70,** the side stand switch **80,** etc. FIG. **4** is a side view showing the side stand **70,** the side stand switch **80,** etc., as viewed from a direction outward in the vehicle width direction. FIG. **6** is a side view showing the side stand **70,** the side stand switch **80,** etc., as viewed from a direction inward in the vehicle width direction. Next, referring to FIG. **4** to FIG. **7****,** the side stand **70,** the side stand switch **80,** etc., will be described.

As shown in FIG. **4****,** the side stand **70** includes a base portion **71** and a tip portion **72.** The base portion **71** is rotatably supported on the bracket **76** by a support shaft **73.** The base portion **71** is rotatable about the axial line **73c** of the support shaft **73.** The base portion **71** is supported on the bracket **76** so that the base portion **71** can rotate in the up-down direction. The side stand **70** is configured so that the position thereof can be changed between the standing position in which the tip portion **72** is located downward of the base portion **71** and the retracted position in which the tip portion **72** is located rearward of the base portion **71.** FIG. **4** to FIG. **7** show a state where the side stand **70** is in the retracted position. When the motorcycle **1** is parked, the side stand **70** is set in the standing position. When the side stand **70** is in the standing position, the tip portion **72** is in contact with the ground. When the rider rides the motorcycle **1,** the side stand **70** is set in the retracted position. When the side stand **70** is in the retracted position, the tip portion **72** is located upward relative to, and spaced apart from, the ground.

The side stand switch **80** is attached to the base portion **71** of the side stand **70.** The side stand switch **80** is arranged outward in the vehicle width direction relative to the base portion **71** of the side stand **70.** The side stand switch **80** is a rotary switch. The side stand switch **80** includes a housing **82,** a rotor **83** secured to the base portion **71** of the side stand **70,** and a switch (not shown) that is turned ON/OFF by the rotation of the rotor **83.** The switch is secured to the housing **82.** The rotor **83** is rotatably assembled to the housing **82.** Since the rotor **83** is secured to the base portion **71** of the side stand **70,** the rotor **83** rotates, together with the side stand **70,** about the axial line **73c** of the support shaft **73.** When the position of the side stand **70** is changed from the standing position to the retracted position or from the retracted position to the standing position by the rotation of the base portion **71,** the switch is turned ON or OFF. Thus, the position of the side stand **70** is detected.

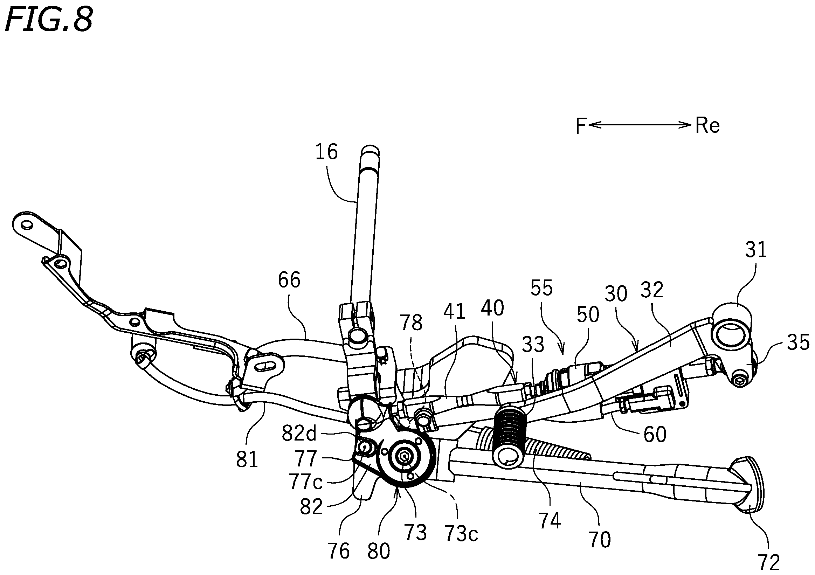

The bracket **76** is provided with a pin **77** extending outward in the vehicle width direction. The pin **77** restricts the rotation of the housing **82** so that the housing **82** does not rotate together with the rotation of the rotor **83.** In the present embodiment, the pin **77** is formed in a columnar shape. The pin **77** is in engagement with the housing **82.** The housing **82** is formed with a U-shaped groove **82d.** The pin **77** is in engagement with the groove **82d.** FIG. **8** is a view showing the side stand **70,** the side stand switch **80,** etc., as viewed from a direction outward in the vehicle width direction along the axial line **73c** of the support shaft **73.** As shown in FIG. **8****,** the pin **77** is arranged forward of the axial line **73c** as viewed from a direction outward in the vehicle width direction along the axial line **73c** of the support shaft **73.** The groove **82d** of the housing **82** is open facing forward. The side stand switch **80** is installed facing forward.

As shown in FIG. **4****,** a wire harness **81** is connected to the side stand switch **80.** A connection port **80a,** to which the wire harness **81** is connected, is formed in a front portion of the side stand switch **80.** The connection port **80a** is open facing forward. The connection port **80a** and the U-shaped groove **82d** are both open facing forward. A rear end **81b** of the wire harness **81** is connected to the side stand switch **80.** The wire harness **81** extends forward from the side stand switch **80.** A front end portion **81a** of the wire harness **81** is connected to the ECU **90** (see FIG. **3**).

As shown in FIG. **6****,** the side stand **70** is provided with a return spring **74.** The return spring **74** is arranged inward in the vehicle width direction relative to the side stand **70.** The return spring **74** is made of a coil spring. The return spring **74** includes a first end portion **74a,** a straight portion **74S** made of a straight strand, a coil portion **74C** made of a spirally-wound strand, and a second end portion **74b.** Here, the first end portion **74a** and the second end portion **74b** are formed in a hook shape. The straight portion **74S** is provided between a coil portion **74C** and the first end portion **74a.**

The bracket **76** of the body frame **3** is provided with an engagement shaft **78** extending inward in the vehicle width direction. The side stand **70** is provided with a hook **79** extending inward in the vehicle width direction. The first end portion **74a** of the return spring **74** engages with the engagement shaft **78.** The second end portion **74b** of the return spring **74** engages with the hook **79.** The engagement shaft **78** and the hook **79** are examples of the "first spring stop member" and the "second spring stop member", respectively. As shown in FIG. **8****,** the engagement shaft **78** is arranged upward of the support shaft **73** as viewed from a direction outward in the vehicle width direction along the axial line **73c** of the support shaft **73.** The engagement shaft **78** is arranged rearward relative to the pin **77** as viewed from a direction outward in the vehicle width direction along the axial line **73c** of the support shaft **73.** The engagement shaft **78** is arranged rearward and upward of the pin **77** as viewed from a direction outward in the vehicle width direction along the axial line **73c** of the support shaft **73.**

The return spring **74** serves the role of holding the side stand **70** in the standing position or the retracted position. That is, the return spring **74** holds the side stand **70** in the standing position when the side stand **70** is in the standing position. The return spring **74** holds the side stand **70** in the retracted position when the side stand **70** is in the retracted position. As the side stand **70** rotates about the axial line **73c** of the support shaft **73,** the hook **79** moves along an arc **73R** that is centered about the axial line **73c,** as schematically shown in FIG. **9****.** In order for the return spring **74** to serve the role described above, the position **79B** of the hook **79** at which the amount of extension of the return spring **74** is at maximum is set between the position **79A** of the hook **79** when the side stand **70** is in the standing position and the position **79C** of the hook **79** when the side stand **70** is in the retracted position. With such settings, when the side stand **70** is in the standing position, the side stand **70** is biased by the return spring **74** in the direction **R1** opposite to the direction toward the retracted position. When the side stand **70** is in the retracted position, the side stand **70** is biased by the return spring **74** in the direction **R2** opposite to the direction toward the standing position. Therefore, the side stand **70** is held by the return spring **74** in the standing position while in the standing position and in the retracted position while in the retracted position.

The support shaft **73,** the engagement shaft **78** and the hook **79** are arranged so that the return spring **74** serves the role described above. That is, the support shaft **73,** the engagement shaft **78** and the hook **79** are arranged so that the position **79B** of the hook **79** at which the amount of extension of the return spring **74** is at maximum is located between the position **79A** of the hook **79** when the side stand **70** is in the standing position and the position **79C** of the hook **79** when the side stand **70** is in the retracted position. In the present embodiment, the engagement shaft **78** is arranged upward of the support shaft **73** as viewed from a direction outward in the vehicle width direction along the axial line **73c** of the support shaft **73** as shown in FIG. **8****.**

Now, it may be possible to arrange the return spring **74** outward of the side stand **70** in the vehicle width direction, and engage the first end portion **74a** of the return spring **74** with the pin **77.** That is, it may be possible to use the pin **77** as an engagement shaft. In such a case, to make the return spring **74** serve the role described above, the pin **77** needs to be arranged upward of the support shaft **73.** In such a case, however, the side stand switch **80** needs to be arranged upward so that the U-shaped groove **82d** is open facing upward. As a result, the connection port **80a** of the side stand switch **80** faces upward, and the wire harness **81** extends upward from the side stand switch **80.** Therefore, it is difficult to ensure a space upward of and near the side stand switch **80.**

On the other hand, in the present embodiment, the return spring **74** is arranged inward in the vehicle width direction relative to the side stand **70.** The side stand switch **80** is arranged outward in the vehicle width direction relative to the side stand **70.** The side stand switch **80** and the return spring **74** are arranged on opposite sides from each other with respect to the side stand **70.** The pin **77** that restricts the rotation of the housing **82** of the side stand switch **80** extends outward in the vehicle width direction from the bracket **76.** The engagement shaft **78** that engages with the first end portion **74a** of the return spring **74** extends inward in the vehicle width direction from the bracket **76.** The pin **77** and the engagement shaft **78** are separate parts. Therefore, the degree of freedom in layout is high for the support shaft **73,** the engagement shaft **78** and the hook **79.**

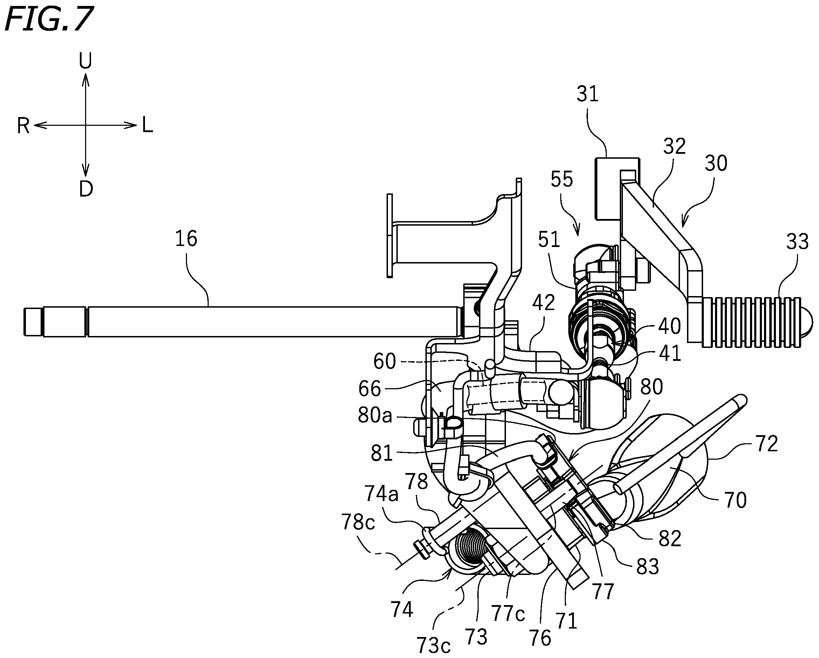

As shown in FIG. **8****,** the engagement shaft **78** is arranged at a position that is off the center line **77c** of the pin **77.** The pin **77** is arranged forward and upward of the support shaft **73** as viewed from a direction outward in the vehicle width direction along the axial line **73c** of the support shaft **73.** As shown in FIG. **7****,** the axial line **78c** of the engagement shaft **78** and the center line **77c** of the pin **77** do not coincide with each other. The axial line **78c** of the engagement shaft **78** and the center line **77c** of the pin **77** are parallel to each other.

As shown in FIG. **4****,** in the present embodiment, since the pin **77** is arranged forward of the support shaft **73,** the groove **82d** and the connection port **80a** of the side stand switch **80** are arranged facing forward. Therefore, the wire harness **81** extends forward from the side stand switch **80.** It is possible to ensure a space upward of and near the side stand switch **80.** In the present embodiment, a part of the quick shifter **55** is arranged in the space.

As shown in FIG. **4****,** the side stand switch **80** and the pin **77** are arranged downward of the shift rod **40.** As shown in FIG. **6****,** the engagement shaft **78** is arranged downward of the shift rod **40.** As shown in FIG. **4****,** the side stand switch **80,** the pin **77** and the engagement shaft **78** are arranged rearward relative to front end **40f** of the shift rod **40** and forward relative to rear end **40b** of the shift rod **40.**

A part of the wire harness **60** connected to the shift pedal sensor **50** is arranged upward of the side stand switch **80.** Another part of the wire harness **60** is arranged upward of the side stand **70.** The wire harness **60** extends in the front-rear direction passing through the space upward of the side stand switch **80.**

The motorcycle **1** according to the present embodiment is configured as described above. Next, various effects realized by the motorcycle **1** will be described.

With the motorcycle **1,** the return spring **74** and the side stand switch **80** are arranged on opposite sides from each other with respect to the base portion **71** of the side stand **70** (see FIG. **7**). The pin **77** that restricts the rotation of the housing **82** of the side stand switch **80** and the engagement shaft **78** that engages with the first end portion **74a** of the return spring **74** are separate parts. In addition, the engagement shaft **78** is arranged at a position that is off the center line **77c** of the pin **77.** Therefore, with the motorcycle **1,** the degree of freedom in layout is high for the side stand switch **80,** the pin **77** and the engagement shaft **78.** Therefore, the quick shifter **55** can be easily arranged upward of and near the side stand switch **80.**

With the motorcycle **1,** as shown in FIG. **8****,** the pin **77** is arranged forward of the axial line **73c** of the support shaft **73** as viewed from a direction outward in the vehicle width direction along the axial line **73c** of the support shaft **73.** The quick shifter **55** can be easily arranged upward of and near the side stand switch **80** without being interfered by the pin **77.**

With the motorcycle **1,** the engagement shaft **78** is arranged upward of the axial line **73c** of the support shaft **73** as viewed from a direction outward in the vehicle width direction along the axial line **73c** of the support shaft **73.** The side stand switch **80,** the pin **77** and the engagement shaft **78** can be arranged in a compact arrangement. Since the engagement shaft **78** extends inward in the vehicle width direction, the quick shifter **55** can be arranged upward of and near the side stand switch **80** without being interfered by the engagement shaft **78.**

As shown in FIG. **4****,** with the motorcycle **1,** the side stand switch **80** is formed with the connection port **80a** that is open facing forward. The wire harness **81** is connected to the connection port **80a.** The wire harness **81** extends forward from the side stand switch **80.** Since the wire harness **81** is not arranged upward of the side stand switch **80,** it is possible to ensure a space upward of the side stand switch **80.** Therefore, the quick shifter **55** can be easily arranged upward of and near the side stand switch **80.**

With the motorcycle **1,** the harness cover **66** into which the wire harness **60** is inserted is arranged upward of the side stand switch **80.** The wire harness **60** is arranged upward of the side stand switch **80.** The wire harness **60** of the quick shifter **55** can be arranged in a compact arrangement upward of and near the side stand switch **80.**

With the motorcycle **1,** the shift rod **40** that links together the shift shaft **16** and the shift pedal **30** is arranged upward of the side stand switch **80,** the pin **77** and the engagement shaft **78.** The shift rod **40** can be arranged in a compact arrangement upward of and near the side stand switch **80.**

While one embodiment has been described above, the embodiment is merely an example, and various other embodiments are possible. Next, other example embodiments will be described briefly.

The shape of the pin **77** is not limited to a columnar shape. The cross-sectional shape of the pin **77** is not limited to a circle. The cross-sectional shape of the pin **77** may be a rectangular shape, a hexagonal shape, etc. There is no particular limitation on the cross-sectional shape of the pin **77.** The pin **77** may be a solid body or a hollow body. For example, the pin **77** may be formed in a tubular shape.

The groove **82d** of the housing **82** is not essential as long as the housing **82** is in engagement with the pin **77** so as to restrict the rotation of the housing **82.** The housing **82** may include an engagement portion, other than the groove **82d,** that engages with the pin **77.**

In the embodiment described above, the straight portion **74S** of the return spring **74** is located forward of the coil portion **74C.** However, the straight portion **74S** may be located rearward of the coil portion **74C.** The straight portion **74S** may be provided between the coil portion **74C** and the second end portion **74b.** The return spring **74** may include the first end portion **74a,** the coil portion **74C** and the second end portion **74b,** and not include the straight portion **74S.**

The first spring stop member that engages with the first end portion **74a** of the return spring **74** is not limited to the engagement shaft **78.** The first spring stop member may be a hook that extends inward in the vehicle width direction from the body frame **3,** for example. There is no particular limitation on the shape of the first spring stop member. The second spring stop member that engages with the second end portion **74b** of the return spring **74** is not limited to the hook **79.** The second spring stop member may be a shaft that extends inward in the vehicle width direction from the side stand **70,** for example. There is no particular limitation on the shape of the second spring stop member.

The vehicle component arranged upward of and near the side stand switch **80** is not limited to the quick shifter **55.**

### Reference Signs List

1: Motorcycle, 3: Body frame, 7: Internal combustion engine, 16: Shift shaft, 30: Shift pedal, 40: Shift rod, 50: Shift pedal sensor, 60: Wire harness (second wire harness), 70: Side stand, 71: Base portion, 73: Support shaft, 74: Return spring, 74a: First end portion, 74b: Second end portion, 74C: Coil portion, 74S: Straight portion, 77: Pin, 78: Engagement shaft (first spring stop member, shaft), 79: Hook (second spring stop member), 80: Side stand switch, 80a: Connection port, 81: Wire harness (first wire harness), 82: Housing, 82d: Groove, 83: Rotor

## Claims

1. A motorcycle **(1)** comprising:
a body frame **(3);**
a side stand **(70)** including a base portion **(71);**
a support shaft **(73)** configured to rotatably support the base portion **(71)** of the side stand **(70)** on the body frame **(3);**
a rotary side stand switch **(80)** including a housing **(82)** and a rotor **(83)** that is secured to the base portion **(71)** of the side stand **(70)** and rotatable relative to the housing **(82);**
a pin **(77)** extending outward in a vehicle width direction from the body frame **(3)** and configured to engage with the housing **(82)** to restrict rotation of the housing **(82);**
a first spring stop member **(78)** extending inward in the vehicle width direction from the body frame **(3);**
a second spring stop member **(79)** extending inward in the vehicle width direction from the side stand **(70);** and
a return spring **(74)** including a first end portion **(74a)** that engages with the first spring stop member **(78)** and a second end portion **(74b)** that engages with the second spring stop member **(79),** wherein:
the side stand switch **(80)** is arranged outward in the vehicle width direction relative to the base portion **(71)** of the side stand **(70);**
the return spring **(74)** is arranged inward in the vehicle width direction relative to the side stand **(70);** and
the first spring stop member **(78)** is arranged at a position that is off a center line **(77c)** of the pin **(77);**
said motorcycle (1) comprises:
a shift pedal **(30);**
a shift pedal sensor **(50)** configured to detect an operation of the shift pedal **(30);** and
an internal combustion engine **(7);**
a shift shaft **(16)** provided on the internal combustion engine **(7);** and
a shift rod **(40)** configured to link together the shift shaft **(16)** and the shift pedal **(30);**
**characterized by**
a first wire harness (60) connected to the shift pedal sensor (50) and extending forward from the shift pedal sensor (50), wherein the first wire harness (60) is arranged upward of the side stand switch (80);
the shift rod **(40)** is arranged upward of the side stand switch **(80),** the pin **(77)** and the first spring stop member **(78);**
wherein the side stand switch **(80),** the pin **(77)** and the first spring stop member **(78)** are arranged rearward relative to a front end **(40f)** of the shift rod **(40)** and forward relative to a rear end **(40b)** of the shift rod **(40).**

2. The motorcycle **(1)** according to claim 1, wherein the pin **(77)** is arranged forward of an axial line **(73c)** of the support shaft **(73)** as viewed from a direction outward in the vehicle width direction along the axial line **(73c)** of the support shaft **(73).**

3. The motorcycle **(1)** according to claim 1 or 2, wherein the first spring stop member **(78)** is arranged upward of an axial line **(73c)** of the support shaft **(73)** as viewed from a direction outward in the vehicle width direction along the axial line **(73c)** of the support shaft **(73).**

4. The motorcycle **(1)** according to any one of claims 1 to 3, wherein:
the return spring **(74)** is made of a coil spring including a coil portion **(74C)** made of a spirally-wound strand and a straight portion **(76)** made of a straight strand; and
the straight portion **(76)** is provided between the coil portion **(74C)** and the first end portion **(74a).**

5. The motorcycle **(1)** according to any one of claims 1 to 4, wherein the first spring stop member **(78)** is a shaft.

6. The motorcycle **(1)** according to any one of claims 1 to 5, wherein:
the housing **(82)** of the side stand switch **(80)** is formed with a U-shaped groove **(82d);** and
the pin **(77)** is in engagement with the groove **(82d).**

7. The motorcycle **(1)** according to any one of claims 1 to 6, wherein:
the side stand switch **(80)** is formed with a connection port **(80a)** that is open facing forward; and
the motorcycle **(1)** includes a second wire harness **(81)** connected to the connection port **(80a).**

## Patentansprüche

1. Motorrad (1), das umfasst:
einen Karosserierahmen (3);
einen Seitenständer (70), der einen Trägerabschnitt (71) enthält;
eine Tragewelle (73), die so ausgeführt ist, dass sie den Trägerabschnitt (71) des Seitenständers (70) an dem Karosserierahmen (3) drehbar trägt;
einen Seitenständer-Drehschalter (80), der ein Gehäuse (82) sowie einen Rotor (83) enthält, der an dem Trägerabschnitt (71) des Seitenständers (70) befestigt ist und relativ zu dem Gehäuse (82) gedreht werden kann;
einen Zapfen (77), der sich von dem Karosserierahmen (3) in einer Fahrzeug-Breitenrichtung nach außen erstreckt und so ausgeführt ist, dass er mit dem Gehäuse (82) in Eingriff kommt, um Drehung des Gehäuses (82) einzuschränken;
ein erstes Feder-Anschlagelement (78), das sich in der Fahrzeug-Breitenrichtung von dem Karosserierahmen (3) nach innen erstreckt;
ein zweites Feder-Anschlagelement (79), das sich in der Fahrzeug-Breitenrichtung von dem Seitenständer (70) nach innen erstreckt;
eine Rückstellfeder (74), die einen ersten Endabschnitt (74a), der mit dem ersten Feder-Anschlagelement (78) in Eingriff kommt, sowie einen zweiten Endabschnitt (74b) enthält, der mit dem zweiten Feder-Anschlagelement (79) in Eingriff kommt, wobei:
der Seitenständer-Schalter (80) in der Fahrzeug-Breitenrichtung relativ zu dem Trägerabschnitt (71) des Seitenständers (70) außen angeordnet ist;
die Rückstellfeder (74) in der Fahrzeug-Breitenrichtung relativ zu dem Seitenständer (70) innen angeordnet ist; und
das erste Feder-Anschlagelement (78) an einer Position angeordnet ist, die außerhalb einer Mittellinie (77c) des Zapfens (77) liegt;
wobei das Motorrad (1) umfasst:
ein Schaltpedal (30);
einen Schaltpedal-Sensor (50), der so ausgeführt ist, dass er eine Betätigung des Schaltpedals (30) erfasst; und
einen Verbrennungsmotor (7);
eine Schaltwelle (16), die an dem Verbrennungsmotor (7) vorhanden ist; sowie eine Schaltstange (40), die so ausgeführt ist, dass sie die Schaltwelle (16) und das Schaltpedal (30) miteinander verbindet,
**gekennzeichnet durch**
einen ersten Kabelbaum (60), der mit dem Schaltpedal-Sensor (50) verbunden ist und sich von dem Schaltpedal-Sensor (50) nach vorn erstreckt, wobei der erste Kabelbaum (60) oberhalb des Seitenständer-Schalters (80) angeordnet ist;
die Schaltstange (40) oberhalb des Seitenständer-Schalters (80), des Zapfens (77) und des ersten Feder-Anschlagelementes (78) angeordnet ist;
wobei der Seitenständer-Schalter (80), der Zapfen (77) und das erste Feder-Anschlagelement (78) relativ zu einem vorderen Ende (40f) der Schaltstange (40) hinten und relativ zu einem hinteren Ende (40b) der Schaltstange (40) vorn angeordnet sind.

2. Motorrad (1) nach Anspruch 1, wobei der Zapfen (77), in der Fahrzeug-Breitenrichtung entlang einer axialen Linie (73c) der Tragewelle (73) nach außen gesehen, vor der axialen Linie (73c) angeordnet ist.

3. Motorrad (1) nach Anspruch 1, wobei das erste Feder-Anschlagelement (78), in der Fahrzeug-Breitenrichtung entlang einer axialen Linie (73c) der Tragewelle (73) nach außen gesehen, oberhalb der axialen Linie (73c) der Tragewelle (73) angeordnet ist.

4. Motorrad (1) nach einem der Ansprüche 1 bis 3, wobei:
die Rückstellfeder (74) aus einer Schraubenfeder besteht, die einen aus einem spiralförmig gewickelten Strang bestehenden Spiralabschnitt (74C) sowie einen aus einem geraden Strang bestehenden geraden Abschnitt (76)einschließt; und
der gerade Abschnitt (76) zwischen dem Spiralabschnitt (74C) und dem ersten Endabschnitt (74a) vorhanden ist.

5. Motorrad (1) nach einem der Ansprüche 1 bis 4, wobei das erste Feder-Anschlagelement (78) eine Welle ist.

6. Motorrad (1) nach einem der Ansprüche 1 bis 5, wobei:
das Gehäuse (82) des Seitenständer-Schalters (80) mit einer U-förmigen Nut (82d) versehen ist; und
der Zapfen (77) mit der Nut (82d) in Eingriff ist.

7. Motorrad (1) nach einem der Ansprüche 1 bis 6, wobei:
der Seitenständer-Schalter (80) mit einem nach vorn offenen Verbindungsanschluss (80a) versehen ist; und
das Motorrad (1) einen zweiten Kabelbaum (81) enthält, der mit dem Verbindungsanschluss (80a) verbunden ist.

## Revendications

1. Motocyclette (1) comprenant :
un cadre de carrosserie (3) ;
une béquille latérale (70) comprenant une partie de base (71) ;
un arbre de support (73) configuré pour supporter de manière rotative la partie de base (71) de la béquille latérale (70) sur le cadre de carrosserie (3) ;
un interrupteur rotatif de béquille latérale (80) comprenant un boîtier (82) et un rotor (83) fixé à la partie de base (71) de la béquille latérale (70) et rotatif par rapport au boîtier (82) ;
une goupille (77) s'étendant vers l'extérieur dans le sens de la largeur du véhicule à partir du cadre de carrosserie (3) et configuré pour s'engager dans le boîtier (82) afin de restreindre la rotation du boîtier (82) ;
un premier élément de butée à ressort (78) s'étendant vers l'intérieur dans la direction de la largeur du véhicule à partir du cadre de carrosserie (3) ;
un second élément de butée à ressort (79) s'étendant vers l'intérieur dans la direction de la largeur du véhicule à partir de la béquille latérale (70) ; et
un ressort de rappel (74) comprenant une première partie d'extrémité (74a) qui s'engage dans le premier élément de butée à ressort (78) et une seconde partie d'extrémité (74b) qui s'engage dans le second élément de butée à ressort (79), dans lequel :
l'interrupteur de béquille latérale (80) est disposé vers l'extérieur dans la direction de la largeur du véhicule par rapport à la partie de base (71) de la béquille latérale (70) ;
le ressort de rappel (74) est disposé vers l'intérieur dans la direction de la largeur du véhicule par rapport à la béquille latérale (70) ; et
le premier élément de butée à ressort (78) est disposé à une position qui est hors de la ligne centrale (77c) de la goupille (77) ;
ladite motocyclette (1) comprend
une pédale de changement de vitesse (30) ;
un capteur de pédale de changement de vitesse (50) configuré pour détecter un fonctionnement de la pédale de changement de vitesse (30) ; et
un moteur à combustion interne (7) ;
un arbre de changement de vitesse (16) monté sur le moteur à combustion interne (7) ; et
une tige de changement de vitesse (40) configurée pour relier l'arbre de changement de vitesse (16) et la pédale de changement de vitesse (30) ;
**caractérisé par**
un premier faisceau de câbles (60) connecté au capteur de pédale de changement de vitesse (50) et s'étendant vers l'avant à partir du capteur de pédale de changement de vitesse (50), dans lequel le premier faisceau de câbles (60) est disposé vers le haut du interrupteur de béquille latérale (80),
la tige de changement de vitesse (40) est disposée en amont de la pédale de changement de vitesse (30), de la goupille (77) et du premier élément de butée à ressort (78) ;
dans lequel l'interrupteur de béquille latérale (80), la goupille (77) et le premier élément de butée à ressort (78) sont disposés vers l'arrière par rapport à l'extrémité avant (40f') de la tige de changement de vitesse (40) et vers l'avant par rapport à l'extrémité arrière (40b) de la tige de changement de vitesse (40).

2. Motocyclette (1) selon la revendication 1, dans laquelle la goupille (77) est disposée en avant d'une ligne axiale (73c) de l'arbre de support (73), vue d'une direction vers l'extérieur dans la direction de la largeur du véhicule le long de la ligne axiale (73c) de l'arbre de support (73).

3. Motocyclette (1) selon les revendications 1 ou 2, dans laquelle le premier élément de butée à ressort (78) est disposé vers le haut d'une ligne axiale (73c) de l'arbre de support (73), vu d'une direction vers l'extérieur dans la direction de la largeur du véhicule le long de la ligne axiale (73c) de l'arbre de support (73).

4. Motocyclette (1) selon l'une quelconque des revendications 1 à 3, dans laquelle:
le ressort de rappel (74) est constitué d'un ressort hélicoïdal comprenant une partie hélicoïdale (74C) constituée d'un brin enroulé en spirale et une partie droite (76) constituée d'un brin droit ; et
la partie droite (76) est prévue entre la partie hélicoïdale (74C) et la première partie d'extrémité (74a).

5. Motocyclette (1) selon l'une quelconque des revendications 1 à 4, dans laquelle le premier élément de butée à ressort (78) est un arbre.

6. Motocyclette (1) selon l'une quelconque des revendications 1 à 5, dans laquelle:
le boîtier (82) de l'interrupteur de béquille latérale (80) est formé d'une rainure en forme de U (82d) ; et
la goupille (77) est engagée dans la rainure (82d).

7. Motocyclette (1) selon l'une des revendications 1 à 6, dans laquelle :
l'interrupteur de béquille latérale (80) est formé avec un port de connexion (80a) qui est ouvert vers l'avant ; et
la motocyclette (1) comprend un second faisceau de câbles (81) connecté à l'orifice de connexion (80a).
